# EUROPÄISCHE PATENTSCHRIFT

(11) **EP 3 589 761 B1**
(45) Veröffentlichungstag und Bekanntmachung des Hinweises auf die Patenterteilung: **13.01.2021**
(21) Anmeldenummer: 18708386.0
(22) Anmeldetag: 27.02.2018
(51) Int. Cl.: F27B 1/02, F27B 1/08, C22B 1/00, C22B 21/00, F27B 3/04, F27B 3/06, F27B 3/18, F27D 13/00, C22B 7/00

(54) **MEHRKAMMERSCHMELZOFEN UND VERFAHREN ZUM SCHMELZEN VON NICHTEISENSCHROTT**
MULTI-CHAMBER MELTING OVEN AND METHOD FOR MELTING NON-FERROUS SCRAP
FOUR DE FUSION À PLUSIEURS CHAMBRES ET PROCÉDÉ DE FUSION D'UNE FERRAILLE NON FERREUSE

(30) Priorität: 01.03.2017 DE 102017104241
(43) Veröffentlichungstag der Anmeldung: 08.01.2020
(73) Patentinhaber: Gautschi Engineering GmbH, 8572 Berg TG (CH)
(72) Erfinder: JUMELET, Tom, 8572 Berg TG (CH); LUTTINGER, Patrick, 5280 Braunau am Inn (AT); HUBBAUER, Herbert, 5280 Braunau am Inn (AT)
(74) Vertreter: Kilchert, Jochen
(86) Internationale Anmeldenummer: PCT/EP2018/054785
(87) Internationale Veröffentlichungsnummer: WO 2018/158237

(56) Entgegenhaltungen:
- EP-A1- 1 146 304
- DE-A1- 2 045 737
- GB-A- 2 493 493
- US-A- 6 053 728

## Beschreibung

Die Erfindung betrifft einen Mehrkammerschmelzofen zum Schmelzen von Schrott aus Nichteisenmetallen, insbesondere Aluminiumschrott, mit den Merkmalen des Oberbegriffs des Anspruchs 1. Ein solcher Ofen ist beispielsweise aus DE 10 325 153 A1 bekannt. Die Erfindung betrifft ferner ein Verfahren zum Schmelzen von Nichteisenschrott, insbesondere Aluminiumschrott.

Bei der Aluminiumproduktion wird zwischen Primäraluminium, das aus Bauxit gewonnen wird, und Sekundäraluminium unterschieden, das durch Umschmelzen von Aluminiumschrott erzeugt wird. Da die Herstellung von Sekundäraluminium sehr viel weniger Energie erfordert als die Gewinnung von Primäraluminium und damit in der Regel umweltfreundlicher ist, gewinnt die Produktion von Sekundäraluminium an Bedeutung. Hierzu kommen Schachtschmelzöfen gemäß DE 10 325 153 A1 zum Einsatz, bei denen im Schmelzschacht das Beschickungsgut vorgewärmt, aufgeheizt und verflüssigt wird. Im Schmelzschacht ist eine Schmelzbrücke angeordnet, auf der das Beschickungsgut verweilt und mit Wärme beaufschlagt wird, bis das Beschickungsgut sich verflüssigt und in die unter der Schmelzbrücke befindliche Ofenkammer fließt, die als Warmhalteofen für das Schmelzbad fungiert. Dieses Konzept des Zweikammerofens mit einer Schmelzbrücke und einem separaten Warmhalteofen ermöglicht eine hohe Qualität des erzeugbaren Aluminiums mit einer geringen Konzentration an Verunreinigungen. Dies liegt daran, dass während der Verweilzeit auf der Schmelzbrücke Verunreinigungen des Aluminiumschrotts, wie Lacke und Öl, thermisch entfernt werden. Eine Weiterentwicklung des Schachtschmelzofens gemäß DE 10 325 153 A1 mit Blick auf die Wärmerückgewinnung ist in DE 10 2010 064 116 A1 beschrieben, die das bekannte Konzept des Zweikammerofens mit einer Schmelzbrücke und einem separaten Warmhalteofen beibehält.

Weitere Öfen zum Schmelzen von Schrott bzw. Metall sind beispielsweise aus der GB 2 493 493 A, US 6 053 728 A und DE 20 45 737 A1 bekannt. Ferner beschreibt die EP 1 146 304 A1 einen Zweikammerofen, der zum Tauschschmelzen von kontaminiertem Aluminiumschrott dient.

Die bekannten Schmelzaggregate sind aufwändig aufgebaut, wartungsintensiv und hinsichtlich des Energiebedarfs optimierbar.

Der Erfindung liegt die Aufgabe zu Grunde, einen Mehrkammerofen zum Schmelzen von Schrott aus Nichteisenmetallen, insbesondere Aluminiumschrott, dahingehend zu verbessern, dass dieser bei guter Schmelzleistung und Metallqualität möglichst günstig in der Anschaffung und im Betrieb ist. Der Erfindung liegt ferner die Aufgabe zu Grunde, ein entsprechendes Verfahren zum Schmelzen von Schrott aus Nichteisenmetallen, insbesondere Aluminiumschrott, anzugeben.

Erfindungsgemäß wird diese Aufgabe mit Blick auf den Mehrkammerofen durch den Gegenstand des Anspruchs 1 und mit Blick auf das Verfahren durch den Gegenstand des Anspruchs 11 gelöst.

Die Erfindung beruht auf dem Gedanken, einen Mehrkammerschmelzofen zum Schmelzen von Schrott aus Nichteisenmetallen, insbesondere Aluminiumschrott, anzugeben, der einen ersten Schachtofen mit einem Schacht für Beschickungsgut aufweist. Im Schacht sind Verunreinigungen des Beschickungsguts entfernbar sind. Der Mehrkammerschmelzofen weist wenigstens eine Ofenkammer auf, die mit dem Schacht des ersten Schachtofens verbunden ist, sowie eine erste Einrichtung zur Wärmezufuhr. Erfindungsgemäß weist der Mehrkammerschmelzofen wenigstens einen zweiten Schachtofen mit einem Schacht für Beschickungsgut, in dem Verunreinigungen des Beschickungsguts entfernbar sind. Die Ofenkammer ist mit dem Schacht des zweiten Schachtofens verbunden und zwischen den Schächten derart angeordnet, dass die Ofenkammer eine Hauptschmelzkammer bildet, in der sich im Betrieb das Schmelzbad befindet.

Durch den zweiten Schachtofen ergibt sich ein einfach aufgebauter, kompakter und wartungsarmer Mehrkammerofen mit hoher Schmelzleistung. Im Unterschied zu den bekannten Öfen hat die Ofenkammer nicht nur Warmhaltefunktion für das Schmelzbad, das bei den bekannten Öfen auf der Schmelzbrücke erzeugt wird, sondern dient als Hauptschmelzkammer. Mit anderen Worten erfolgt in den Schächten der Schachtöfen hauptsächlich die thermische Reinigung und Vorwärmung des Schrotts. Das Schmelzen des Schrotts erfolgt hauptsächlich in der gemeinsamen Ofenkammer. Dazu ist die Ofenkammer zwischen den Schächten angeordnet und mit diesen derart verbunden, dass die Ofenkammer die Hauptschmelzkammer bildet. Dies bedeutet, dass die Schmelzenergie hauptsächlich in der Ofenkammer dem Schrott zugeführt wird.

Zwar ist aus DE 34 12 964 C2, die auf die Anmelderin bzw. deren Rechtsvorgängerin zurückgeht, ein Mehrkammerofen zum Schmelzen von Aluminiumschrott bekannt, der zwei Beschickungsschächte aufweist. Der Schrott wird in den jeweiligen Beschickungsschacht zusammen mit Metallschmelze eingebracht, der diese benetzt und teilweise verflüssigt. Die Metallschmelze wird über eine Rohrleitung in den jeweiligen Beschickungsschacht gepumpt. Dieser Ofen ist für die Produktion von Sekundäraluminium aus verunreinigtem Schrott nicht geeignet, da die Verunreinigungen im Beschickungsschacht nicht entfernt werden können. Die gemeinsame Ofenkammer zwischen den Beschickungsschächten dient überdies ausschließlich als Warmhaltebad, da die gesamte Schmelzenergie in den beiden Primärschmelzkammern zugeführt wird.

Im Rahmen der Anmeldung werden unter dem Begriff Aluminium auch Aluminiumlegierungen verstanden.

Bevorzugte Ausführungen der Erfindung sind in den Unteransprüchen angegeben.

So können die Ofenkammer und das untere Ende der Schächte unmittelbar miteinander verbunden sein. Die Ofenkammer bildet daher zusammen mit den unteren Schachtenden, d.h. dem jeweiligen Schachtfuß, eine durchgehende, gemeinsame Kammer, die sich über die gesamte Ofenbreite erstreckt. Dies hat den Vorteil, dass das Beschickungsgut über die Schächte direkt in das Schmelzbad gelangt und dort verflüssigt wird. In den Schächten werden die Prozessschritte Vorwärmen, Aufheizen und Entfernen der Verunreinigungen, insbesondere der organischen Verunreinigungen kombiniert. Das Beschickungsgut wird in den Schacht in kaltem Zustand eingesetzt, sinkt im Schacht ab und erwärmt sich dabei. Den im Schmelzprozess entstehenden und durch die Schächte aufsteigenden Abgasen wird dabei Wärme entzogen. Die Schachtöfen arbeiten daher im wärmetechnisch günstigen Gegenstromprinzip. Der Wärmeübergang erfolgt dabei durch Konvektion. Durch die Geometrie, insbesondere die Höhe der Schächte kann die Verweilzeit des Schrotts im Schacht so eingestellt werden, dass ausreichende Wärme in den Schrott eingetragen wird, um die Verunreinigungen zu entfernen, bevor der Schrott am Schachtfuß in das Schmelzbad eintaucht.

Vorzugsweise sind die Ofenkammer und die Schächte seitliche nebeneinander angeordnet sein. Daraus ergibt sich ein besonders kompakter Aufbau des Ofens.

Bei einer besonders bevorzugten Ausführung des Mehrkammerschmelzofens weisen die Ofenkammer und die Schächte jeweils Längsseiten auf, die aneinander angrenzen, wobei die Ofenkammer und die Schächte entlang der gesamten Längsseiten miteinander verbunden sind. Dadurch ergibt sich ein großer Verbindungsbereich zwischen den Schächten und der Ofenkammer für eine optimale Wärmeübertragung von der Ofenkammer in die Schächte.

Die Ofenkammer und die Schächte können eine durchgängige, gemeinsame Ofensohle bilden. Eine Pumpe zum Transport der Schmelze ist daher nicht zwingend erforderlich, so dass der Ofenaufbau einfach gestaltet werden kann. Es ist aber denkbar, eine Pumpe oder ein Bodengefälle zum Ausguss hin vorzusehen.

Die Schächte können derart einbautenfrei ausgebildet sein, dass das Beschickungsgut direkt in das Schmelzbad gelangt. Konkret wird bei dieser Ausführungsform auf die im Stand der Technik übliche Schmelzbrücke am Schachtfuß verzichtet.

Zur Erhöhung des Wärmeeintrags in den Schächten können diese jeweils eine zweite Einrichtung zur Wärmezufuhr aufweisen.

Vorzugsweise sind die Schächte derart angeordnet, dass die Beschickung durch die Gewichtskraft des Beschickungsguts erfolgt. Die Schächte sind daher im Wesentlichen vertikal angeordnet.

Zur Verbesserung der Schmelzleistung kann ein Rührer, insbesondere ein elektromagnetischer Rührer der Ofenkammer zugeordnet sein, der für eine Homogenisierung der Temperatur sorgt.

Bei einer bevorzugten Ausführung kann der Mehrkammerschmelzofen eine Hub-und Senkeinrichtung aufweisen, die mit der Ofenkammer zum Verstellen eines Neigungswinkels der Ofenkammer verbunden ist, um den Abstich zu erleichtern. Bei kleineren Öfen können diese auch stationär angeordnet sein.

Im Rahmen der Erfindung wird auch ein Verfahren zum Schmelzen von Schrott aus Nichteisenmetallen, insbesondere Alumininiumschrott, vorgeschlagen, bei dem Beschickungsgut durch wenigstens zwei Schachtöfen einer als Hauptschmelzkammer ausgebildeten Ofenkammer zugeführt wird, wobei organische Verunreinigungen des Beschickungsguts in den Schachtöfen entfernt werden und das gereinigte Beschickungsgut von den Schachtöfen direkt in die als Hauptschmelzkammer ausgebildete Ofenkammer überführt wird. Zu den Vorteilen des Verfahrens wird auf die Ausführungen zu dem erfindungsgemäßen Mehrkammerofen verwiesen.

Die Erfindung wird nachstehend anhand eines Ausführungsbeispiels unter Bezug auf die beigefügten schematischen Zeichnungen näher erläutert.

In diesen zeigen
- Fig. 1: einen Längsschnitt eines Mehrkammerofens nach einem erfindungsgemäßen Ausführungsbeispiel im Bereich der Ofenkammer;
- Fig. 2: einen Längsschnitt des Mehrkammerofens nach Fig. 1 im Bereich des Schachtofens;
- Fig. 3: einen Querschnitt des Mehrkammerofens nach Fig. 1;
- Fig. 4: einen Längsschnitt des Mehrkammerofens nach Fig. 1 im Bereich des Schachtofens im nicht gekippten Zustand und
- Fig. 5: eine perspektivische Draufsicht des Mehrkammerofens nach Fig. 1 mit geöffneten Ofentüren.

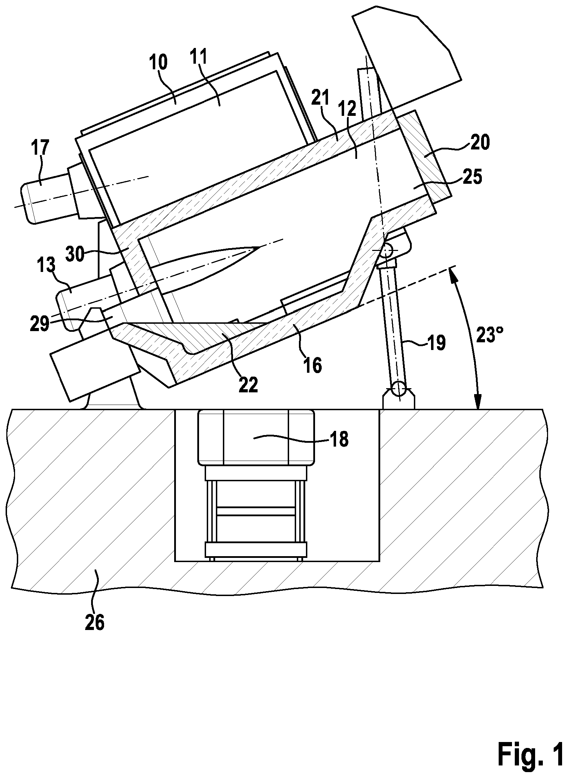

Der Mehrkammerofen gemäß Fig. 1 bis 5 wird zur Produktion von Sekundäraluminium aus Aluminiumschrott eingesetzt. Dabei kann sowohl sauberer als auch verunreinigter Aluminiumschrott verarbeitet werden. Etwaige Verunreinigungen, insbesondere organische Verunreinigungen, wie Lacke oder Öle, werden durch die im Schmelzprozess entstehenden Abgase verbrannt und vor dem Schmelzen entfernt. Die Verarbeitung von Schrott aus anderen Nichteisenmetallen ist möglich.

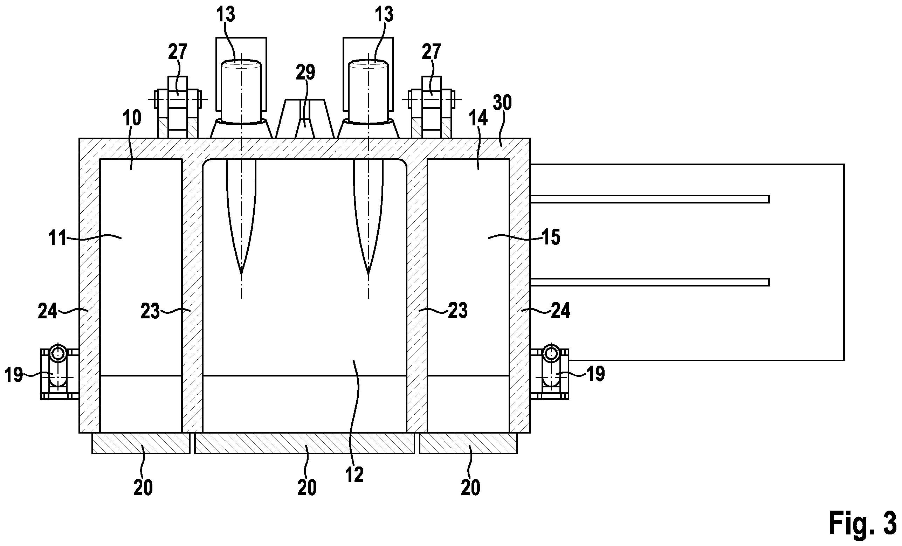

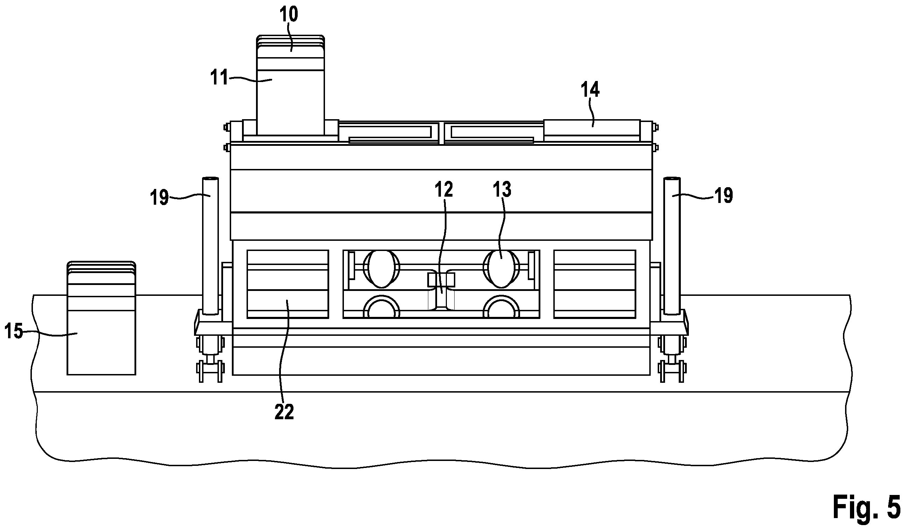

Der Mehrkammerofen weist einen ersten Schachtofen 10 und einen zweiten Schachtofen 14 auf. Zwischen den beiden Schachtöfen 10, 14 ist eine Ofenkammer 12 angeordnet. Die Schachtöfen 10, 14 und die Ofenkammer 12 bilden zusammen den Mehrkammerofen. Die Schachtöfen 10, 14 sind mit der Ofenkammer 12 fluidverbunden, so dass eine Wärme- und Stoffübertragung zwischen den Schachtöfen 10, 14 und der Ofenkammer 12 möglich ist. Die Ofenkammer 12 bildet die Hauptschmelzkammer, in die im Betrieb die zum Schmelzen erforderliche Wärme, zumindest aber ein Großteil der zum Schmelzen erforderlichen Wärme eingebracht wird. Dazu weist die Ofenkammer 12 eine erste Einrichtung 13 zur Wärmezufuhr auf. Diese kann einen, zwei oder mehr Brenner, insbesondere Gasbrenner oder eine elektrische Heizung umfassen, wie in den Figuren 3 und 5 gut zu sehen. Die Ofenkammer ist in an sich bekannter Weise aus einem feuerfesten Material gebildet.

Die Ofenkammer 12 weist eine wannenförmige Ofensohle 16 auf, die im Betrieb das Schmelzbad 22 aufnimmt. Auf der der Ofensohle 16 gegenüberliegenden Seite ist die Ofenkammer 12 durch eine Ofendecke 21 begrenzt. In der Ofendecke 21 sind Öffnungen für die Schachtöfen 11, 14 ausgebildet. Die Ofenkammer 12 weist eine Rückwand 30 auf, an der die Brenner befestigt sind, die durch Öffnungen in der Rückwand 30 die Ofenkammer 12 mit Wärme beaufschlagen. Die Brenner sind schräg nach unten geneigt. An der Rückwand 30 ist ferner der Ausguss 29 ausgebildet. Dieser kann als Abstichventil bei einem stationären Ofen oder als Auslaufstutzen bei einem schwenkbaren Ofen ausgebildet sein. In den Figuren ist ein schwenkbarer Ofen gezeigt, an dessen Rückwand 30 Drehgelenke 27 vorgesehen sind, die eine horizontale Drehachse bilden, um die der gesamte Ofen verschwenkbar ist, bspw. um einen Winkel von 23°. Andere Winkel sind möglich. Eine Hub- und Senkeinrichtung 19 bildet den Schwenkantrieb und ist von den Drehgelenken 27 beabstandet mit dem Ofenboden verbunden. Die Hub- und Senkeinrichtung 19 kann durch einen oder mehrere Hydraulikzylinder gebildet sein, die seitlich vom Ofen am Ofenboden angreifen, wie in den Figuren 3 und 5 gezeigt. Andere Schwenkantriebe sind möglich.

Die der Rückwand gegenüberliegende Seite des Ofens bildet den Zugang zur Ofenkammer 12 und ist im Betrieb durch Ofentüren 20 verschlossen. Wie in Fig. 3 zu erkennen, sind drei Ofentüren 20 vorgesehen, die den Schachtöfen 11, 14 und der mittleren Ofenkammer 12 zugeordnet sind. Die Breite der Türen 20 entspricht in etwa der Breite der Schachtöfen 11, 14, bzw. der Ofenkammer 12.

Die Schachtöfen 10, 14 sind im Wesentlichen identisch aufgebaut. Jeder Schachtofen 10, 14 weist einen Schacht 11, 15 auf, in den Beschickungsgut, d.h. Aluminiumschrott eingesetzt werden kann. Üblicherweise werden Schrottpakete chargiert. Die Ofenkammer 12 und das untere Ende der Schächte 11, 15 sind miteinander unmittelbar verbunden. Dabei bilden die Ofenkammer 12 und die am Schachtfuß der Schächte 11, 15 angeordneten Schmelzkammern eine durchgängige, gemeinsame Kammer, die im Betrieb mit Schmelze gefüllt ist.

Die Schächte 11, 15 weisen innere und äußere Seitenwände 23, 24 auf. Die äußeren Seitenwände 24 der Schächte 11, 15 bilden zugleich die äußeren Seitenwände der Ofenkammer 12. Die inneren Seitenwände 23 erstrecken sich parallel zu den äußeren Seitenwänden 24 und enden mit Abstand zur Ofensohle 16, um die Fluidverbindung zwischen den Schachtöfen 10, 14 und der Ofenkammer 12 zu schaffen. Die Ofensohle 16 erstreckt sich über die gesamte Breite des Ofens in etwa auf derselben Höhe und bildet eine gemeinsame Sohle für die Schachtöfen 10, 14 und die Ofenkammer 12. Die Rückwand 30 des Ofenraums 12 bildet zugleich die Rückwand der Schächte 11, 15. Im Betrieb sind die Schächte 11, 15 durch einen Schachtverschluss 28 abgedeckt, der zum Chargieren entfernt werden kann.

Wie in Fig. 3 gezeigt, sind die Ofenkammer 12 und die Schächte 11, 15 im Querschnitt rechteckig ausgebildet und weisen jeweils Längsseiten auf, die aneinander angrenzen. Die Ofenkammer 12 und die Schächte 11, 15 sind entlang der gesamten Längsseiten miteinander fluidverbunden.

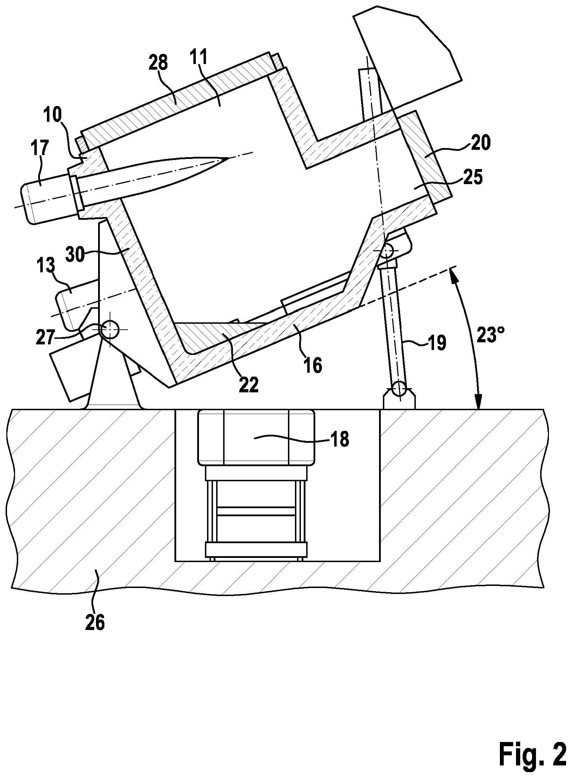

Wie in Fig. 2 zu erkennen sind die Schächte 11, 15 einbautenfrei, so dass das Beschickungsgut direkt auf die Ofensohle 16 absinken kann. Der Ofen ist pumpenlos, d.h. er kann ohne Schmelzepumpe betrieben werden. Es ist möglich, eine Schmelzepumpe zu ergänzen. Die Schächte 11, 15 weisen zweite Einrichtungen zur Wärmezufuhr auf, die als schräg nach unten geneigte Brenner ausgebildet sind. Andere Heizorgane sind möglich.

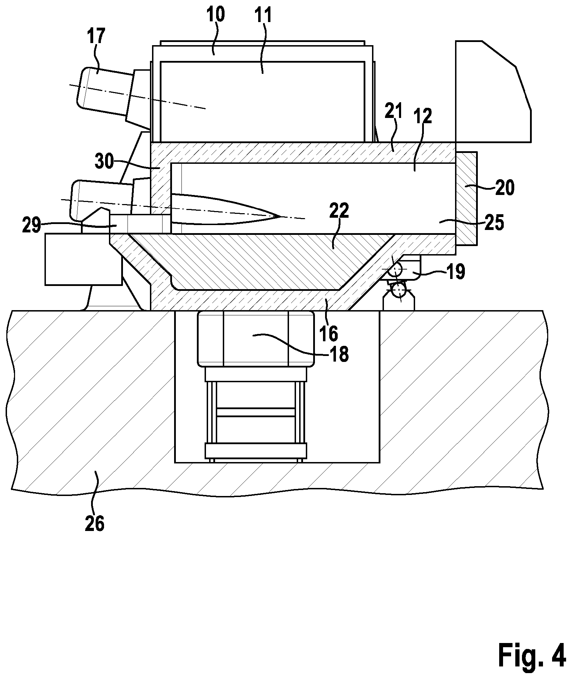

Der Ofen steht auf einem Fundament 26, in dem ein elektromechanischer Rührer 28 versenkt ist. Im Schmelzbetrieb (Fig. 4, 5) befindet sich der Rührer 28 unterhalb der mittleren Ofenkammer 12, d.h. in der Mitte des Ofens.

Wie in Fig. 5 gezeigt kann wenigstens einer der Schächte 11, 15 (hier der rechte Schacht 15) abnehmbar ausgebildet sein. Dies hat den Vorteil, dass einer der Schachtöfen temporär stillgelegt werden kann, wenn der zum Schmelzen verfügbare Schrott nicht für den gleichzeitigen Betrieb mit zwei Schachtöfen 10, 14 ausreicht. Der zweite Schachtofen 14 wird dann verschlossen (Fig. 5).

Der Mehrkammerofen funktioniert wie folgt.

Zum Anfahren oder zum Schmelzen von sauberem Aluminiumschrott kann der Ofen über den Zugang 25 beschickt werden. Dazu wird zumindest die mittlere Ofentür 20 geöffnet, wie in Fig. 5 gezeigt. Im Schmelzbetrieb wird verunreinigter Aluminiumschrott über die Schächte 11, 15 zugeführt, der in den Schächten 11, 15 erwärmt wird und mit dem Verflüssigen des Aluminiumschrotts am Schachtfuß durch seine Gewichtskraft absinkt. Dabei werden Verunreinigungen im Schrott verbrannt und somit entfernt, bevor die jeweilige Charge am Schachtfuß ankommt und in das Schmelzebad eintaucht. Die Erwärmung erfolgt durch die beim Schmelzen entstehenden Abgase, die in den Schächten 11, 15 nach oben steigen. Die Erwärmung kann durch die zweiten Einrichtungen 17 zur Wärmezufuhr in den Schächten 11, 15 erhöht werden.

Die Ofenkammer 12 fungiert als Hauptschmelzkammer weil dort das Schmelzbad 22 permanent erwärmt wird, um die erforderliche Schmelzenergie für den im Bereich der Schächte 11, 15 ins Schmelzbad 22 eintauchenden Schrott zu erzeugen. Im Schmelzbetrieb wird das Schmelzbad 22 durch den elektromagnetischen Rührer 18 bewegt.

Zur Entnahme der Schmelze wird der Ofen entweder am Ausguss 29 abgestochen oder geneigt (Fig. 1, 2), so dass die Schmelze aus dem Ausguss 29 abfließen kann.

### Bezugszeichenliste

- 10: erster Schachtofen
- 11: Schacht
- 12: Ofenkammer
- 13: erste Einrichtung zur Wärmezufuhr
- 14: zweiter Schachtofen
- 15: Schacht
- 16: Ofensohle
- 17: zweite Einrichtung zur Wärmezufuhr
- 18: Rührer
- 19: Hub- und Senkeinrichtung
- 20: Ofentüren
- 21: Ofendecke
- 22: Schmelzbad
- 23: innere Seitenwände
- 24: äußere Seitenwände
- 25: Zugang
- 26: Fundament
- 27: Drehgelenke
- 28: Schachtverschluss
- 29: Ausguss
- 30: Rückwand

## Patentansprüche

1. Mehrkammerschmelzofen zum Schmelzen von Schrott aus Nichteisenmetallen, aufweisend einen ersten Schachtofen (10) mit einem Schacht (11) für Beschickungsgut, in dem Verunreinigungen des Beschickungsguts entfernbar sind, und wenigstens eine Ofenkammer (12), die mit dem Schacht (11) des ersten Schachtofens (10) verbunden ist und eine erste Einrichtung (13) zur Wärmezufuhr aufweist,
**gekennzeichnet durch**
wenigstens einen zweiten Schachtofen (14) mit einem Schacht (15) für Beschickungsgut, in dem Verunreinigungen des Beschickungsguts entfernbar sind, wobei die Ofenkammer (12) mit dem Schacht (15) des zweiten Schachtofens (14) verbunden und zwischen den Schächten (11, 15) derart angeordnet ist, dass die Ofenkammer (12) eine Hauptschmelzkammer bildet, in der sich im Betrieb das Schmelzbad befindet.

2. Mehrkammerschmelzofen nach Anspruch 1
**dadurch gekennzeichnet, dass**
die Ofenkammer (12) und das untere Ende der Schächte (11, 15) miteinander unmittelbar verbunden sind.

3. Mehrkammerschmelzofen nach Anspruch 1 oder 2
**dadurch gekennzeichnet, dass**
die Ofenkammer (12) und die Schächte (11, 15) seitliche nebeneinander angeordnet sind.

4. Mehrkammerschmelzofen nach einem der vorhergehenden Ansprüche
**dadurch gekennzeichnet, dass**
die Ofenkammer (12) und die Schächte (11, 15) jeweils Längsseiten aufweisen, die aneinander angrenzen, wobei die Ofenkammer (12) und die Schächte (11, 15) entlang der gesamten Längsseiten miteinander verbunden sind.

5. Mehrkammerschmelzofen nach einem der vorhergehenden Ansprüche
**dadurch gekennzeichnet, dass**
die Ofenkammer (12) und die Schächte (11, 15) eine durchgängige, gemeinsame Ofensohle (16) bilden.

6. Mehrkammerschmelzofen nach einem der vorhergehenden Ansprüche
**dadurch gekennzeichnet, dass**
die Schächte (11, 15) derart einbautenfrei ausgebildet sind, dass das Beschickungsgut direkt in das Schmelzbad gelangt.

7. Mehrkammerschmelzofen nach einem der vorhergehenden Ansprüche
**dadurch gekennzeichnet, dass**
die Schächte (11, 15) jeweils eine zweite Einrichtung (17) zur Wärmezufuhr aufweisen.

8. Mehrkammerschmelzofen nach einem der vorhergehenden Ansprüche
**dadurch gekennzeichnet, dass**
die Schächte (11, 15) derart angeordnet sind, dass die Beschickung durch die Gewichtskraft des Beschickungsguts erfolgt.

9. Mehrkammerschmelzofen nach einem der vorhergehenden Ansprüche
**dadurch gekennzeichnet, dass**
ein Rührer (18) der Ofenkammer (12) zugeordnet ist.

10. Mehrkammerschmelzofen nach einem der vorhergehenden Ansprüche
**dadurch gekennzeichnet, dass**
eine Hub- und Senkeinrichtung (19) mit der Ofenkammer (12) zum Verstellen eines Neigungswinkels der Ofenkammer (12) verbunden ist.

11. Verfahren zum Schmelzen von Schrott aus Nichteisenmetallen, bei dem Beschickungsgut durch wenigstens zwei Schachtöfen (10, 14) einer als Hauptschmelzkammer ausgebildeten Ofenkammer (12) zugeführt wird, wobei organische Verunreinigungen des Beschickungsguts in den Schachtöfen (10, 14) entfernt werden und das gereinigte Beschickungsgut von den Schachtöfen (10, 14) direkt in die als Hauptschmelzkammer ausgebildete Ofenkammer (12) überführt wird.

## Claims

1. Multi-chamber melting oven for melting scrap made of non-ferrous metals, comprising a first shaft oven (10) with a shaft (11) for feed material, in which impurities of the feed material can be removed, and at least one oven chamber (12), which is connected to the shaft (11) of the first shaft oven (10) and comprises a first device (13) for supplying heat,
**characterized by**
at least one second shaft oven (14) with a shaft (15) for feed material, in which impurities of the feed material can be removed, wherein the oven chamber (12) is connected to the shaft (15) of the second shaft oven (14) and is arranged between the shafts (11, 15) in such a way that the oven chamber (12) forms a main melting chamber in which the melting bath is located during operation.

2. Multi-chamber melting oven according to claim 1,
**characterized in that**
the oven chamber (12) and the lower end of the shafts (11, 15) are directly connected to each other.

3. Multi-chamber melting oven according to claim 1 or 2,
**characterized in that**
the oven chamber (12) and the shafts (11, 15) are arranged next to each other on the side.

4. Multi-chamber melting oven according to any one of the preceding claims,
**characterized in that**
the oven chamber (12) and the shafts (11, 15) each comprise longitudinal sides adjacent to one another, wherein the oven chamber (12) and the shafts (11, 15) are connected along the entire longitudinal sides.

5. Multi-chamber melting oven according to any one of the preceding claims,
**characterized in that**
the oven chamber (12) and the shafts (11, 15) form a continuous, common oven sole (16).

6. Multi-chamber melting oven according to any one of the preceding claims,
**characterized in that**
the shafts (11, 15) are designed to be free of any built-in elements in such a way that the feed material enters directly into the melting bath.

7. Multi-chamber melting oven according to any one of the preceding claims,
**characterized in that**
the shafts (11, 15) each comprise a second device (17) for supplying heat.

8. Multi-chamber melting oven according to any one of the preceding claims,
**characterized in that**
the shafts (11, 15) are arranged in such a way that the feeding takes place by means of the weight force of the feed material.

9. Multi-chamber melting oven according to any one of the preceding claims,
**characterized in that**
a stirrer (18) is assigned to the oven chamber (12).

10. Multi-chamber melting oven according to any one of the preceding claims,
**characterized in that**
a lifting and lowering device (19) is connected to the oven chamber (12) for adjusting an inclination angle of the oven chamber (12).

11. Method for melting scrap made of non-ferrous metals, where the feed material is supplied by at least two shaft ovens (10, 14) of an oven chamber (12) designed as the main melting chamber, wherein organic impurities of the feed material in the shaft ovens (10, 14) are removed and the purified feed material is transferred from the shaft ovens (10, 14) directly into the oven chamber designed as a main melting chamber (12).

## Revendications

1. Four de fusion à plusieurs chambres pour a fusion d'une ferraille composée de métaux non ferreux, comportant un premier four à cuve (10) avec une cuve (11) pour le matériau de chargement, dans laquelle les impuretés du matériau de chargement peuvent être enlevées et au moins une chambre de four (12), qui est reliée à la cuve (11) du premier four à cuve (10) et comporte un premier dispositif (13) pour l'alimentation en chaleur
**caractérisé par**
au moins un deuxième four à cuve (14) avec une cuve (15) pour le matériau de chargement, dans laquelle les impuretés du matériau de chargement peuvent être enlevées, sachant que la chambre de four (12) est reliée à la cuve (15) du deuxième four à cuve (14) et est disposée entre les cuves (11, 15) de telle manière que la chambre de four (12) forme une chambre de fusion principale dans laquelle se trouve, en fonctionnement, le bain de fusion.

2. Four de fusion à plusieurs chambres selon la revendication 1,
**caractérisé en ce que**
la chambre de four (12) et l'extrémité inférieure des cuves (11, 15) sont reliées directement entre elles.

3. Four de fusion à plusieurs chambres selon la revendication 1 ou 2,
**caractérisé en ce que**
la chambre de four (12) et les cuves (11, 15) sont disposées latéralement l'une à côté de l'autre.

4. Four de fusion à plusieurs chambres selon l'une quelconque des revendications précédentes,
**caractérisé en ce que**
la chambre de four (12) et les cuves (11, 15) comportent respectivement des côtés longitudinaux, qui sont adjacents l'un à l'autre, sachant que la chambre de four (12) et les cuves (11, 15) sont reliées entre elles le long de la totalité des côtés longitudinaux.

5. Four de fusion à plusieurs chambres selon l'une quelconque des revendications précédentes,
**caractérisé en ce que**
la chambre de four (12) et les cuves (11, 15) forment une sole de four commune générale (16).

6. Four de fusion à plusieurs chambres selon l'une quelconque des revendications précédentes,
**caractérisé en ce que**
les cuves (11, 15) sont constituées sans élément encastré de telle manière que le matériau de chargement parvient directement dans le bain de fusion.

7. Four de fusion à plusieurs chambres selon l'une quelconque des revendications précédentes,
**caractérisé en ce que**
les cuves (11, 15) comportent respectivement un deuxième dispositif (17) pour l'apport de chaleur.

8. Four de fusion à plusieurs chambres selon l'une quelconque des revendications précédentes,
**caractérisé en ce que**
les cuves (11, 15) sont disposées de telle manière que le chargement a lieu par le poids du matériau de chargement.

9. Four de fusion à plusieurs chambres selon l'une quelconque des revendications précédentes
**caractérisé en ce qu'**
un agitateur (18) est attribué à la chambre de four (12) .

10. Four de fusion à plusieurs chambres selon l'une quelconque des revendications précédentes,
**caractérisé en ce qu'**
un dispositif de levée et de descente (19) est relié à la chambre de four (12) pour ajuster un angle d'inclinaison de la chambre de four (12).

11. Procédé de fusion d'une ferraille composée de métaux non ferreux, pour lequel du matériau de chargement est acheminé par au moins deux fours à cuve (10, 14) à une chambre de four (12) constituée comme une chambre de fusion principale, sachant que les impuretés organiques du matériau de chargement sont enlevées dans les fours à cuve (10, 14) et le matériau de chargement nettoyé est transféré des fours à cuve (10, 14) directement dans la chambre de four (12) constituée comme chambre de fusion principale.
